# EUROPÄISCHE PATENTSCHRIFT

(11) **EP 2 697 611 B1**
(45) Veröffentlichungstag und Bekanntmachung des Hinweises auf die Patenterteilung: **13.01.2016**
(21) Anmeldenummer: 12720774.4
(22) Anmeldetag: 10.04.2012
(51) Int. Cl.: G01G 19/02, G01M 5/00

(54) **SYSTEM ZUM MESSEN DER BELASTUNG EINER BRÜCKE BEIM BEFAHREN DURCH EIN FAHRZEUG**
SYSTEM FOR MEASURING THE LOAD ON A BRIDGE WHEN BEING USED BY A VEHICLE
SYSTÈME DE MESURE DE LA CHARGE D'UN PONT LORS DU PASSAGE D'UN VÉHICULE

(30) Priorität: 11.04.2011 AT 5132011
(43) Veröffentlichungstag der Anmeldung: 19.02.2014
(73) Patentinhaber: Petschacher, Markus, 9560 Feldkirchen (AT)
(72) Erfinder: Petschacher, Markus, 9560 Feldkirchen (AT)
(74) Vertreter: Sonn & Partner Patentanwälte
(86) Internationale Anmeldenummer: PCT/AT2012/000098
(87) Internationale Veröffentlichungsnummer: WO 2012/139145

(56) Entgegenhaltungen:
- EP-A1- 2 192 377
- WO-A2-2009/063523
- US-A- 4 901 575
- US-A- 5 111 897
- US-A1- 2005 204 825
- US-A1- 2007 062 289
- OU, LI, YU: "Development and performance of wireless sensor network for structural health monitoring", PROC. OF SPIE. SMART STRUCTURES AND MATERIALS, Bd. 5391, 29. Juli 2004 (2004-07-29), Seiten 765-773, XP040183626,

## Beschreibung

Die Erfindung betrifft ein System zum Messen der Belastung einer Brücke beim Befahren durch ein Fahrzeug gemäß dem Oberbegriff von Anspruch 1.

Es ist seit langem ein Anliegen, Brückenbauten hinsichtlich ihrer Belastung, wenn sie von Fahrzeugen, insbesondere schweren LKWs, befahren werden, zu überwachen, um beispielsweise frühzeitig Wartungsarbeiten oder Instandhaltungsarbeiten zu veranlassen und dadurch spätere aufwändige Reparaturarbeiten und Sanierungen zu vermeiden.

Aus Yuri Tselishchev et al., "Wireless Senso Network Tasked for Structural Health Monitoring of Bridges", IEEE Sensors 2009 Conference, ISBN 978-1-4244-5335-1/09, S. 1796-1799, ist ein System zum Überwachen von Brücken, ein sog. SHM.System (SHM-Structural Health Monitoring), bekannt, bei dem mehrere Messkanal-Einleiter, sog. ALIX-Einheiten, mit angeschlossen, ihre Messdaten bevorzugt über Funk kommunizierenden DMS-Sensoren in Reihenschaltung vorgesehen sind. Eine erste ALIX-Einheit dient zugleich als sog. Gateway zur Funkübertragung von Messdaten zu externen Stellen. Die ALIX-Einheiten bilden dabei in ihrer Serienschaltung ein örtliches Netz, wobei zur Energieversorgung ein Ethernet-Kabel eingesetzt wird, das zugleich zur Kommunikation verwendet wird.

Ein anderes System, ein sogenanntes BWIM-System (BWIM-Bridge Weigh-In-Motion), ist in der US 5 111 897 A beschrieben. Dieses System ist zum Messen der Belastung einer Brücke beim Befahren durch ein Fahrzeug vorgesehen, mit mehreren Messmodulen, die je mehrere Messkanal-Einheiten aufweisen, denen separate DMS-Sensoren zugeordnet sind, die zum Anbringen an der Brücke vorgesehen sind, wobei die Sensoren analoge Messsignale drahtgebunden an die ihnen jeweils zugeordneten Messkanal-Einheiten übermitteln, die mittels A/D-Konvertern digitale Messdaten aus den Messsignalen herleiten. Im einzelnen handelt es sich um ein tragbares Messgerät, das hinsichtlich Messwerterfassung und Messdatenauswertung autark ist, abgesehen davon, dass es mit Dehnmessstreifen-Sensoren verbunden ist. Im Einklang mit der dort vorgestellten Gerätephylosophie ist eine eigene, dezentrale Energieversorgungseinheit vorgesehen; mittels einer Analog Front End (AFE)-Karte werden die von den DMS-Sensoren einlangenden Messdaten digitalisiert und aufbereitet, wonach sie zu einem Geräte-eigenen Rechner, einer CPU-Karte, übertragen werden. Mit dieser Rechner-Karte werden die erforderlichen Berechnungen durchgeführt, wobei z.B. Geschwindigkeit und Gewicht eines Fahrzeugs ermittelt werden, und diese Rechenergebnisse werden sodann in einer Speicherkarte - ebenfalls dezentral - gespeichert. Zwischen den einzelnen Karten, bestehen Busverbindungen.

In der WO 2009/063523 A2, ist eine Einrichtung zur Überwachung des Zustands von Baukonstruktionen, z.B. Brücken, geoffenbart, wobei mehrere Messgeräte vorgesehen sind, die jeweils mit einer Batterie/Solar-Stromversorgungseinheit versehen sind; weiters ist jedes Messgerät mit einem eigenen Sende/Empfangsmodul sowie mit einer Datenaufbereitungseinheit (CPU) ausgestattet. Inwieweit diese bekannte Einrichtung auch zur Messung der Belastung einer Brücke beim Befahren durch ein Fahrzeug geeignet sind, bleibt offen. Abgesehen davon fehlt es hier an einer Gruppierung von Messmodulen in einer Parallelanordnung, die drahtgebunden über eine PoE-Schalteinheit mit einem lokalen Server verbunden sind.

In dem Artikel Ou et al., "Development und performance of wireless sensor network for structural health monitoring", Proc. pf Spie. Smart Structures and Materials, ist auf eine Funkübertragung von Sensorsignalen bei der Überwachung von Bauwerken abgestellt. Auch ist eine dezentrale Energieversorgung der Sensoren erforderlich.

Weiters ist in US 2007/0062289 A1 die Überwachung von Bauwerken, z.B. Brücken betroffen, wobei eine Untersuchung mit Hilfe von akustischen Signalen im Hinblick auf eine Gewichtserfassung (AWIM-Acoustic Weigh in Motion) von passierenden Fahrzeugen vorgesehen ist.

Auch wurde bereits vorgeschlagen (s. "Kleine Zeitung", 15. April 2009, Seite 35), ein Brücken-Monitoring mit Bilderkennungsmechanismen einzusetzen, um einerseits das Gewicht von über der Brücke fahrenden LKWs und andererseits die Achslasten zu erfassen; die erhaltenen Daten sollten mit Hilfe einer Software ausgewertet werden. Da dabei auch PKWs erfasst werden, wurde es gemäß diesem Vorschlag auch als vorteilhaft angesehen, dass eine komplette Verkehrszählung möglich wäre. Was die Fahrzeuge anlangt, wurden dabei insbesondere Geschwindigkeit und Achsabstand erfasst. Die Fahrzeuge werden über Sensoren erkannt und LKW-Klassen unter anderem auch auf Grund der Achsanzahl und Abstände zugeordnet.

Es besteht nach wie vor ein Bedarf an einem Mess-System, das einfach in der Ausbildung ist, verlässlich im Betrieb ist und rasch die gewünschten Daten für die Auswertung im Hinblick auf eine zuverlässige Brückenbelastungsanalyse zur Verfügung stellt.

Zur Lösung der gestellten Aufgabe sieht die Erfindung ein System wie in Anspruch 1 angegeben vor. Vorteilhafte Ausführungsformen und Weiterbildungen sind in den abhängigen Ansprüchen definiert.

Es sind somit Messmodule vor Ort, im Bereich der Brücke, vorgesehen, wobei diese Messmodule je mehrere Messkanal-Einheiten aufweisen, mit denen gesonderte Sensoren, nämlich DMS-Sensoren (DMS - Dehnmessstreifen) verbunden sind. Ein derartiges Messmodul mit den zugehörigen Sensoren hat eine "spinnenartige" Konfiguration von Modul und Sensoren, und wie erwähnt werden an einer Brücke mehrere derartige Messmodule ("Spinnen") mit zugehörigen Sensoren angebracht. Die Sensoren können an der Unterseite der Brücke, theoretisch aber auch innerhalb des Brückenaufbaus angeordnet sein, und sie dienen dazu, die Belastung der jeweiligen Brücke in einer geeigneten Form, durch Erfassung von Durchbiegungen, zu messen. Die Messmodule können auch gruppenweise zusammengefasst werden, je nach den örtlichen Gegebenheiten. Um die Brückentragwerks-Temperatur zu erfassen und die gemessene Temperatur bei den Auswertungen der Belastungsdaten mit zu berücksichtigen, ist es zweckmäßig, dass wenigstens ein Messmodul mit einem Temperatursensor verbunden ist. Auch kann im Hinblick auf die dynamische Erfassung der Belastungsmessdaten ein Beschleunigungssensor vorgesehen sein, der mit wenigstens einem Messmodul verbunden bzw. diesem zugeordnet ist.

Die Messdaten werden sodann über einen Router-Rechner und z.B. über Internet zur zentralen Auswerteeinheit übertragen.

Jedes Messmodul ist zum Schutz der Elektronik bevorzugt in einem dicht verschlossenen Gehäuse, z.B. einem Metallgehäuse, untergebracht.

Während beispielsweise der Temperatursensor ein digitaler Temperatursensor sein kann, sind die Belastungs-Sensoren, die DMS-Sensoren, regelmäßig analoge Sensoren. Diese Sensoren geben somit analoge Messsignale ab, und diese analogen Messsignale werden in den Messmodulen mit Hilfe von dort vorgesehenen A/D-Konvertern digitalisiert, um so die digitalen Messdaten für die Übertragung zur entfernten Auswerteeinheit herzuleiten.

Für jedes Messmodul mit zugehörigen Sensoren ist vorgesehen, dass die Messsignale der DMS-Sensoren drahtgebunden zum zugehörigen Messmodul, zu den dort zugeordneten Messkanal-Einheiten, übertragen werden, wobei hier die drahtgebundene Übertragung problemlos möglich ist, da nur relativ kurze Distanzen für die Übertragung gegeben sind und parallel dazu die Energieversorgung darüber erfolgen kann (Power over Ethernet-PoE).

Beim vorliegenden Mess-System liegen somit mehrere dezentrale Messstationen vor, die über ein örtliches Netz, ein LAN (LAN - Local Area Network) verbunden sind. Dabei ist mit den Messmodulen ein örtlicher Rechner oder Server (hier auch Slave-Computer genannt) verbunden, um vor Ort die Daten gegebenenfalls aufzubereiten und zwischenzuspeichern, bevor sie an die zentrale Auswerteeinheit, genauer an einen Auswerte-Rechner, übermittelt werden. Diese Übermittlung kann insbesondere über eine mobile Internet-Verbindung erfolgen, und demgemäß ist als Server oder Router bevorzugt ein WLAN-Server vorgesehen. Der örtliche Server/Router weist bevorzugt ein GSM- oder UMTS-Modem zur Datenübertragung auf.

Insgesamt wird somit ein einfaches, problemlos skalierbares und insbesondere rasch und einfach montierbares System vorgesehen. In diesem Zusammenhang ist es auch vorteilhaft, wenn die Übertragungs-Schnittstelle zugleich zum Empfang von Versorgungsspannung für das Messmodul eingerichtet ist, das eine zugehörige Energieversorgungseinheit aufweist. Dabei ist es weiters günstig, wenn die Energieversorgungseinheit unterschiedliche Spannungen für digitale bzw. analoge Schaltungsteile des Messmoduls vorsieht.

Der lokale Server kann das gesamte Mess-System, also die Messmodule mit den daran "hängenden" Sensoren, steuern und überwachen bzw. verwalten und die Messdaten aller Stationen aufbereiten sowie zwischenspeichern. Im Fall einer Internet-Verbindung zur Übertragung der Messdaten ist es weiters auch möglich, über den (WEB-)Server im Fall eines Internet-basierten Fernzugriffs alle Geräte über einen WEB-Browser zu bedienen und für spezifische Einsatzsituationen von der zentralen Stelle aus zu konfigurieren.

In Ergänzung zum vorliegenden Mess-System mit den Messmodulen samt Sensoren ist es auch von Vorteil, wenn eine Kamera auf der Brücke angebracht wird, um die über die Brücke fahrenden Fahrzeuge von der Seite her optisch zu erfassen; zweierlei Arten von Kameras sind im Einsatz vorgesehen, einerseits Überkopfkameras, um Übersichtsbilder des Fahrzeuges zu erhalten, und andererseits lateral zur Straßenachse angebrachte Hochgeschwindigkeitskameras, um hier insbesondere die Fahrzeug-Achsen zu erfassen und die entsprechenden Erkenntnisse mit den Belastungs-Messdaten, wie sie von den DMS-Sensoren aufgenommen werden, hinsichtlich einer vereinfachten Auswertung zu koppeln.

Am Ort der zentralen, entfernten Auswerteeinheit kann mit Vorteil dem eigentlichen Auswerte-Rechner ein Pufferspeicher zur Zwischenspeicherung der übermittelten Messdaten vorgeschaltet sein.

Während, wie erwähnt, bevorzugt im Bereich der jeweiligen Brücke die Signalübertragung von den Sensoren zum jeweiligen Mess-Modem sowie vom Mess-Modem zum Server bzw. Router drahtgebunden erfolgt, wird eine drahtlose Messdaten-Übertragung von dieser lokalen Messanordnung zur entfernten Auswerteeinheit vorgesehen.

Wie erwähnt ermöglicht das vorliegende Mess-System einen geringen Aufwand für die Installation an zu überwachenden Brücken sowie nichtsdestoweniger eine zentralisierte Verarbeitung der Daten und auch Überwachung der Systeme. Dadurch wird der gesamte Arbeitsablauf im Zuge der Messungen vereinfacht, und es wird auch eine parallele Durchführung von mehreren Messungen an verschiedenen Standorten ermöglicht. Auf Grund der dezentralen Messeinheiten und der einfachen Verdrahtung ergibt sich ein deutlicher Kostenvorteil, und überdies kann das vorliegende System problemlos an spezifische Messaufgaben angepasst werden, verglichen mit derzeit am Markt erhältlichen Systemen. Auf diese Weise wird es mit dem vorliegenden System ermöglicht, eine effiziente Brücken-Messtechnik in großem Umfang einzusetzen. Ein vorteilhafter Nutzen des vorliegenden Mess-Systems ergibt sich in der Folge auch für Mautsysteme und für ein Verkehrsmanagement.

Von besonderer Bedeutung ist beim vorliegenden Mess-System das Konzept der "verteilten Messstation", d.h. das Unterteilen der Messeinheiten in Messmodule mit jeweils einer beschränkten Anzahl von angeschlossenen Sensoren, beispielsweise, wie sich in der Praxis als besonders günstig erwiesen hat, mit bis zu acht DMS-Sensoren pro Messmodul, wobei dann diese Messmodule die entsprechenden Messdaten der zugehörigen Sensoren in digitaler Form liefern. Diese verteilten Mess"stationen" werden vom jeweiligen lokalen Server zeitlich synchronisiert werden, d.h. der lokale Server hält die zugehörigen Messmodule oder Messstationen in Synchronität.

Die Erfindung wird nachfolgend anhand von in der Zeichnung dargestellten, besonders bevorzugten Ausführungsbeispielen, auf die sie jedoch nicht beschränkt sein soll, noch weiter erläutert. In der Zeichnung zeigen im Einzelnen:
Fig. 1 eine ganz schematische Darstellung eines Teils einer Autobahnbrücke mit darin angedeuteten Positionen für Messmodule und Sensoren des vorliegenden Mess-Systems;
Fig. 2 in den Teilfiguren Fig. 2A (lokaler Teil des Mess-Systems) und Fig. 2B (entfernter zentraler Teil des Systems) schematisch den Aufbau des vorliegenden Systems zum Messen der Belastung von Brücken;
Fig. 3 ein Blockschaltbild eines beim System gemäß Fig. 2A vorgesehenen Messmoduls und

die Figuren 4 und 5 Ausführungsbeispiele für zwei unterschiedliche Messkanal-Einheiten, nämlich für einen DMS-Sensor (Fig. 4) und für einen Temperatursensor (Fig. 5).

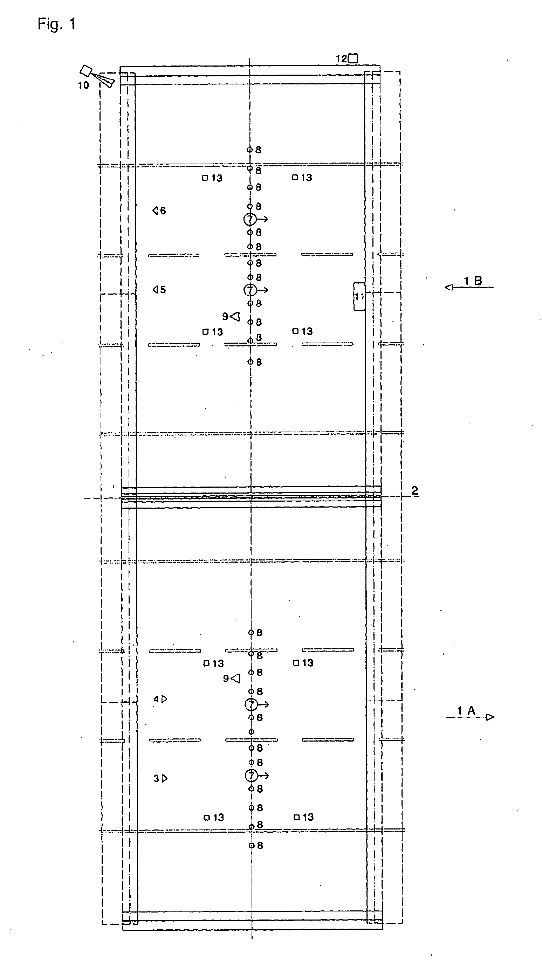

In Fig. 1 ist ganz schematisch ein Teil einer Brücke 1, beispielsweise einer Autobahnbrücke mit zwei Fahrtrichtungen 1A, 1B, gezeigt, wobei beidseits der Achse 2 der Autobahnbrücke 1 Fahrspuren 3, 4 bzw. 5, 6 vorhanden sind. An der Unterseite der Brücke 1 sind an den an Fig. 1 angedeuteten Positionen einerseits Messmodule 7 und andererseits Positionen .von DMS-Sensoren 8 sowie eines Temperatur-Sensors 9 ersichtlich; die Positionen der DMS-Sensoren 8 sind durch kleine Ringe angedeutet, im Weiteren jedoch der Einfachheit halber nicht mit gesonderten Bezugszahlen bezeichnet. Es ergibt sich aber aus der Darstellung in Fig. 1, dass auf der gemäß der Darstellung linken Seite acht DMS-Sensoren 8 mit dem Messmodul 7 verbunden sind, wogegen gegebenenfalls auch weniger als acht DMS-Sensoren 8 vorgesehen werden können.

Zusätzlich ist aus der Fig. 1 auch eine Videokamera 10 ersichtlich, die dazu vorgesehen ist, über die Brücke 1 fahrende Fahrzeuge, insbesondere LKWs, und dabei insbesondere deren Achszahlen zu erfassen. Weiters sind schematisch ein Stromversorgungskasten 11 für das lokale Netzwerk (LAN) mit den Messmodulen sowie ein lokaler Router 12 veranschaulicht.

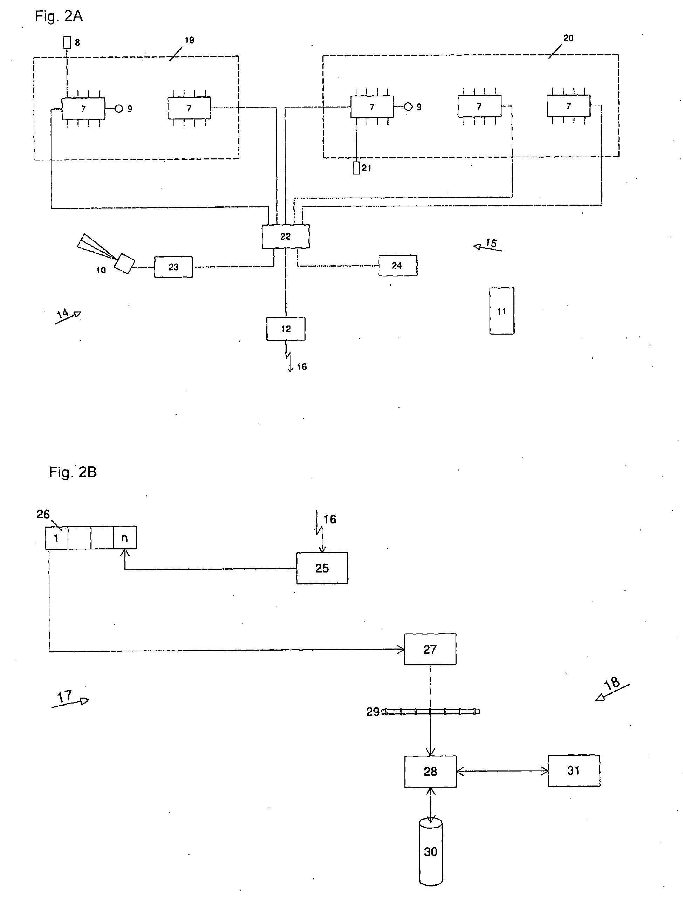

Die einzelnen Komponenten des Systems, nämlich Messmodule 7 mit Sensoren 8, 9, aber auch mit Router 12 und Kamera 10, werden nachfolgend anhand der Figuren 2 bis 5 noch näher erläutert.

In Fig. 1 sind weiters noch mit kleinen Quadraten ADMP-Einheiten 13 dargestellt (ADMP - Axle Detection Measurement Point - Achsdetektions-Messpunkt). Es handelt sich hierbei um Sensoren, mit deren Hilfe die Geschwindigkeit der Fahrzeuge ermittelt werden kann.

Der obere Teil von Fig. 2, die Teilfigur Fig. 2A, zeigt beispielhaft eine lokale Anordnung 14 des vorliegenden Mess-Systems, welche (als LAN-Netz 15) über eine nur schematisch dargestellte Internet-Verbindung 16 mit einem zentralen, entfernten Auswertebereich 17, mit einer Auswerteeinheit 18 des Systems verbunden ist. Es sollte selbstverständlich sein, dass mehrere derartige lokale Mess-Anordnungen 14 mit dem zentralen Bereich 17 zusammenarbeiten, wie dieser in Fig. 2 gezeigt ist, auch wenn in Fig. 2 nur eine einzelne lokale Mess-Anordnung 14 gezeigt ist.

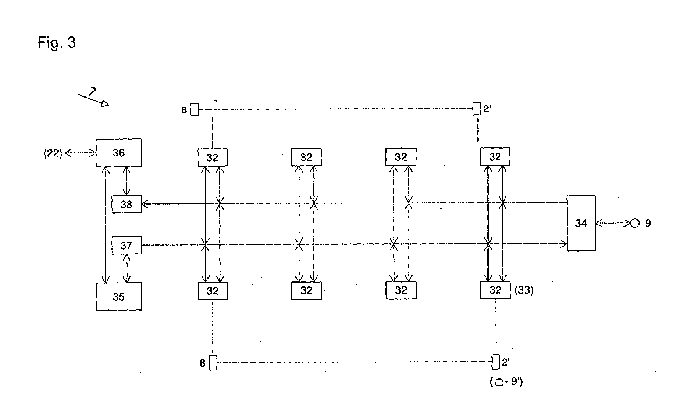

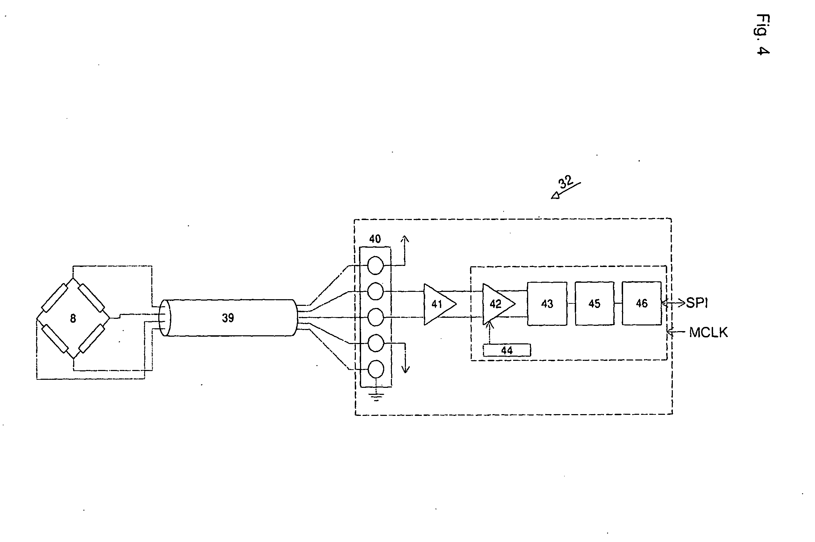

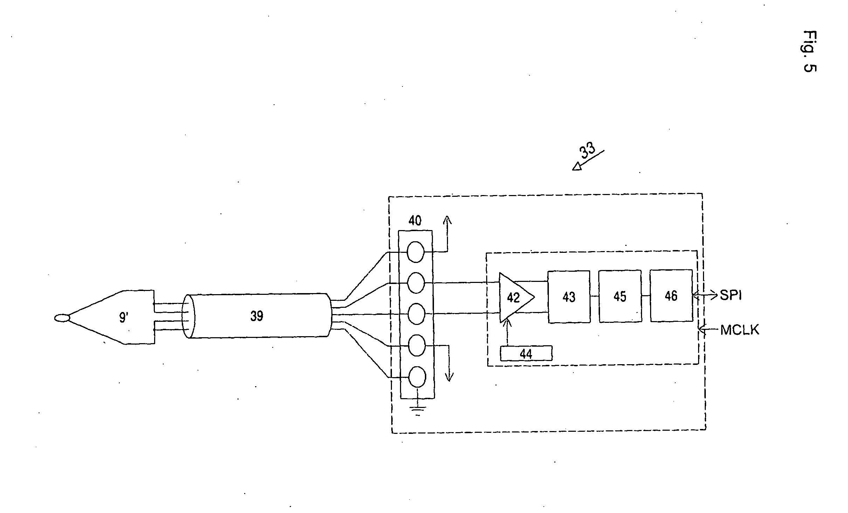

Gemäß Fig. 2A umfasst die lokale Anordnung 14 beispielsweise zwei Gruppen 19, 20 mit jeweils mehreren Messmodulen 7, die entsprechende Messkanal-Einheiten mit Anschlussstellen für Sensoren, nämlich Belastungssensoren 8 in Form von DMS-Sensoren, Temperatursensoren 9, aber gegebenenfalls auch Beschleunigungssensoren 21 aufweisen. Die Messmodule 7 gemäß Fig. 1 werden nachfolgend noch näher anhand der Fig. 3 erläutert werden, ihre Messkanal-Einheiten anhand der Figuren 4 und 5.

Die einzelnen Messmodule 7, die in einem Ethernet-Netzwerk 15 angeordnet sind, sind gemäß Fig. 2 mit einem PoE-Schaltmodul 22 verbunden (PoE - Power over Ethernet - Stromversorgung über Ethernet). An dieses Schaltmodul 22 ist sodann der bereits anhand der Fig. 1 angesprochene Server/Router 12 angeschlossen, der zur Netzwerkverwaltung, zur Vorab-Datenverarbeitung, zur Zwischenspeicherung, als Router, als WLAN-Server sowie als GSM- bzw. UMTS-Modem für die Internet-Verbindung 16 fungiert.

Weiters ist in Fig. 2A die Kamera 10 veranschaulicht, die über einen Data-Grabber 23, also ein Daten-Auslesegerät, mit dem PoE-Schaltmodul 22 verbunden ist. Überdies kann, wie im Beispiel gemäß Fig. 2A gezeigt, ein Slave-Computer 24 für Vorab-Berechnungen im Zuge der Datenauswertung vorgesehen sein, wobei auch dieser Slave-Computer 24 mit dem Schaltmodul 22 verbunden ist.

Im zentralen Messsystem-Bereich 17 ist ein Upload-Server 25 vorgesehen, über den die Internet-Verbindung 16 bewerkstelligt wird. Mit diesem Upload-Server 25 ist ein Pufferspeicher 26, einer Art Warteschlange, verbunden, von dem bzw. der die Messdaten über einen Sender 27 zur eigentlichen zentralen Auswerteeinheit 18, mit einem zentralen Auswerte-Rechner 28 - über eine Firewall 29 - gelangen. Der zentrale Rechner 28 greift auf eine Datenbank 30 zu, und er arbeitet auf Basis einer Analyse-Software, die mit einem Analyse-Modul 31 in Fig. 2B veranschaulicht ist.

Die Einteilung der Messmodule 7 etc. in Gruppen, z.B. 19, 20, ist dann von Vorteil, wenn eine Gruppierung in logische Einheiten aus statisch konstruktiver Sicht zweckmäßig erscheint. In diesem Fall kann eine gruppenweise Behandlung der Messdaten eine wesentlich einfachere Signalverarbeitung mit sich bringen.

Die Messmodule 7 sind insofern ein wesentlicher Teil des vorliegenden Mess-Systems, als sie eine große Nähe zu den eigentlichen Sensoren 8, 9 aber auch 21 mit sich bringen, so dass analoge Sensor-Signale bereits nach kurzem Wege digitalisiert werden können. Wie nachstehend anhand der Fig. 3 noch näher erläutert werden wird, werden in der bevorzugten Ausführungsform bis zu acht Sensoren, insbesondere die DMS-Sensoren 8, mit einem derartigen Modul 7 synchron gehalten.

Alle Messmodule 7 werden im gezeigten Ausführungsbeispiel über das PoE-Modul 22 mit elektrischer Energie versorgt. Dabei ist von Vorteil, dass dünne Kabel verwendet werden können, die sich einfach verlegen lassen. Eine Beschränkung ist durch eine maximale Länge von 100 m gegeben.

Über den Server bzw. Router 12 werden alle Messdaten online versendet, und er wird zugleich bevorzugt als zentraler Rechner für den lokalen Teil 14 verwendet, wobei er die Messmodule 7 in den einzelnen Gruppen 19, 20 synchronisiert; der Router 12 empfängt permanent Datenpakete, ordnet diese und bildet sogenannte dac-Dateien pro Gruppe, in denen jeweils ein Messergebnis oder mehrere Messergebnisse enthalten sein können.

Der Beschleunigungssensor 21 ist für das vorliegende Mess-System nicht unbedingt notwendig, er kann jedoch im Bedarfsfall im Mess-System integriert werden, und zwar entweder als analoger Sensor an einem der Ausgänge für die DMS-Sensoren 8, wie in Fig. 2A gezeigt, oder als digitaler Sensor, insbesondere an einer RS485-Schnittstelle (vgl. nachfolgend noch Fig. 3 und 5).

Der lokale Slave-Server 24 kann zusätzlich eingesetzt werden, um parallel zum Router bzw. Server 12 Daten zu empfangen und vor Ort Berechnungen durchzuführen.

Die Warteschlange 26 im zentralen Bereich 17 dient nicht nur als asynchroner Speicher, sondern bietet auch die Möglichkeit, Wartungs- und Installationsarbeiten am zentralen Rechner 28 durchzuführen. Der Transmitter (Sender) 27 ist ein zeitlich getriggerter Dienst, der die Warteschlange 26 mit einer oberen Grenze von Paketen ausliest und durch die Firewall 29 dem Rechner 28 übergibt. Die Kamera 10 ist eine Hochgeschwindigkeits-Kamera, die als ergänzender "Sensor" angesehen werden kann; für die Ermittlung der geometrischen Abmessungen eines über die Brücke 1 (Fig. 1) fahrenden Fahrzeugs sollte diese Kamera 10 mindestens 200 fps (frames per second - Rahmen bzw. Teilbilder pro Sekunde) erstellen. Die Analyse erfolgt dann zeitversetzt mit Hilfe des SW-Moduls 31. Der Data-Grabber 23 ist genaugenommen ein Rechner mit Gigabit Ethernet (GigE), um die Kommunikation mit der Kamera 10 zu gewährleisten. Die Auslese-Software und der Server/Router 12 sind miteinander zweckmäßigerweise synchronisiert.

Die Datenbank 30 enthält zentral alle relevanten Daten eines jeden Messprojekts, bezogen auf die jeweilige Brücke 1. Diese Datenbank 30 kann aber selbstverständlich auch mehrere zugleich laufende Messungen verwalten.

In Fig. 3 ist ein Blockschaltbild eines Messmoduls 7 näher gezeigt, wobei auch einzelne Sensoren in Verbindung mit diesem Messmodul angedeutet sind. Das Messmodul 7 erfasst beispielsweise die analogen Signale von bis zu acht DMS-Sensoren 8, die an der zu messenden Brücke 1 (Fig. 1) montiert sind, und setzt die analogen Signale in einzelnen Messkanal-Einheiten 32 bzw. 33 um. Wie bereits erwähnt ist es von Vorteil, in der Gruppe 19 bzw. 20 (Fig. 2A) die Tragwerkstemperatur aufzunehmen, damit globale Dehnungsänderungen des Tragwerks der Brücke 1 berücksichtigt werden können. Dieser Temperatursensor kann beispielsweise als digitaler Sensor 9 vorgesehen sein, der an eine RS485-Schnittstelle 34 des Messmoduls 7 angeschlossen werden kann. Alternativ kann im Fall eines analogen Temperatur-Sensors 9' eine geeignete Messkanal-Einheit 33 mit A/D-Wandler zugeordnet sein, vgl. auch Fig. 5, die nachstehend noch näher erläutert werden wird.

Wesentlich sind vor allem die Dehnungsmessstreifen-Sensoren 8, die als analoge Wegaufnehmer dazu dienen, an der Unterseite der Brücke 1 Dehnungen in Folge von Belastungen beim Überfahren der Brücke durch insbesondere schwere Fahrzeuge zu messen.

Die Spannungsversorgung des Messmoduls 7, bei dem bevorzugt alle Komponenten auf einer gemeinsamen Platine angebracht sind, erfolgt wie erwähnt über Ethernet - PoE, wobei jedes Messmodul 7 ein entsprechendes PoE-Modul 35 in Verbindung mit einem Schnittstellenmodul 36, z.B. einem "Linux Embedded Modul", aufweist. Mit dem PoE-Modul 35 ist sodann eine Versorgungsspannungsstufe 37 verbunden, die im gezeigten Beispiel zwei Betriebsspannungen vorsieht, nämlich 3,3 V für alle digitalen Komponenten des Messmoduls 7 und 5 V für alle analogen Komponenten. Für die analogen Komponenten wäre theoretisch aber auch eine andere Versorgungsspannung, z.B. 2,5 V, möglich.

Das PoE-Modul 35 enthält beispielsweise in an sich herkömmlicher Weise einen DC/DC-Wandler mit Buck-Topologie, der die 48 V der PoE-Spannungsversorgung auf 6 V heruntersetzt. Danach ist ein zweiter DC/DC-Buck-Wandler vorgesehen, der diese Spannung von 6 V auf 3,3 V zur Versorgung der digitalen Komponenten, insbesondere auch des Linux-Moduls 36, reguliert. Ein dritter, linearer Wandler wandelt die 6 V Versorgungsspannung auf eine 5 V Spannung für die Analogtechnik um; ein linearer Wandler wird hier deshalb vorzugsweise gewählt, da dann die Genauigkeit bzw. Sauberkeit der Spannung gewährleistet wird.

Wie bereits vorstehend erwähnt kann an der Brücke 1 zur Stromversorgung ein entsprechendes Aggregat (11 in Fig. 1) vorgesehen werden. Diese Stromversorgung 11 kann mit 4x12 V-Batterien realisiert werden, um die für die PoE-Technik mögliche 48 V-Spannung sicher zu stellen. Anstatt der 4x12 V-Batterien, z.B. Autobatterien, können auch weniger Batterien, mindestens mit 36 V Ausgangsspannung, vorgesehen werden, wobei dann eine elektronische Spannungserhöhung (sog. Boost-Konverter) vorzusehen wäre, wie dies an sich bekannt ist. Die gesonderte Spannungsversorgung der Analog- und der Digital-Teile im Messmodul 7 hat den Vorteil, dass Störungen durch Überkopplungen vermieden werden kön-

Das Linux Embedded Modul 36 dient zur Kommunikation zwischen dem Messmodul 7 und dem lokalen Netz 15, dem Ethernet; beispielsweise wird ein Modul 36 mit Linux-Betriebssystem verwendet, wobei in diesem Fall das Modul 36 einen 10/100 Megabit Ethernet-Anschluss sowie serielle Schnittstellen (asynchron, SPI etc.) zur Verfügung stellt (SPI - Serial Peripheral Interface). Wegen der begrenzten Anschlüsse wird die SPI-Schnittstelle zu den einzelnen Messkanal-Einheiten 32 etc. über eine erweiterte SPI-Schnittstelle 38 hergestellt.

Das Messmodul 7 vereint eine hochpräzise Messtechnik mit einer schnellen digitalen Signalverarbeitung, wie sich auch näher aus der nachfolgenden Erläuterung der Figuren 4 und 5 ergibt. Dabei ist eine Optimierung im Hinblick auf die Vermeidung von Störungen der Messtechnik, etwa durch Koppeleffekte, Übersprechen etc., möglich.

Bevorzugt erfolgt der Einbau des Messmoduls 7 in ein geschlossenes Gehäuse, insbesondere ein Metallgehäuse, bevorzugt ein verschraubtes Alu-Gehäuse, welches beispielsweise Abmessungen von 220 mm x 123 mm x 80 mm aufweisen kann. Das Messmodul 7 ist dabei für einen Betrieb bei einer Umgebungstemperatur von -40°C bis +50°C geeignet.

In Fig. 4 ist beispielhaft eine Messkanal-Einheit 32 in Verbindung mit einem über ein Koaxialkabel 39 angeschlossenen DMS-Sensor 8 gezeigt, wobei wie erwähnt die Messkanal-Einheit 32 eine Komponente des Messmoduls 7 ist, an dem ähnlich einer "Spinne" die beispielsweise bis zu 8 oder 9 verschiedenen Sensoren über Leitungen (Koaxialkabel 39) angeschlossen sein können. Jeder Messkanal 32 stellt auf der Platine Lötstützpunkte 40 für den Anschluss des geschirmten 4-poligen Koaxialkabels 39 zum zugehörigen Sensor 8 (Dehnmessstreifen in Brückenschaltung) bereit. Ein fünfter Lötpunkt ist mit Erde bzw. mit der Abschirmung des Koaxialkabels 39 verbunden. Zwei Lötpunkte dienen zur wahlweisen Spannungsversorgung (3,3 V oder 5 V wie oben ausgeführt), und zwei Lötpunkte bzw. Signalanschlüsse sind im Messkanal 32 mit einem Vorverstärker 41 verbunden, der beispielsweise eine bis zu 1400-fache Verstärkung, im getesteten Beispiel eine 300-fache Verstärkung, vorsieht. Von diesem Vorverstärker 41 gelangen die Messsignale (differenzielle Brückensignale) über einen programmierbaren Verstärker 42 (PGA - Programmable Gain Amplifier - Verstärker mit programmierbarer Verstärkung) zu einem AD-Wandler 43. Am Verstärker 42 kann die Verstärkung über eine Eingabeeinheit 44 eingestellt werden, z.B. auf eine x1, x2, x4, x8, x16, x32, x64-Verstärkung.

Der AD-Wandler 43 ist beispielsweise ein 16 Bit - Sigma-Delta-AD-Wandler. Für das jeweilige Messmodul 7 betrachtet ist eine exakte Synchronisierung der Sampling-Zeitpunkte der AD-Wandler 43 der acht Messkanäle nicht erforderlich, da die Messsignale integral ausgewertet werden. Über die Vorverstärkung 41, 42 sowie dem Wandler 43 sind umfangreiche Einstellmöglichkeiten für die Kalibrierung und Durchführung der AD-Wandlung gegeben.

In Fig. 4 ist sodann symbolisch ein Filter 45 dargestellt. Hierzu ist jedoch zu ergänzen, dass bevorzugt im Rahmen des vorliegenden Messsystems kein Hardware-Filter eingesetzt wird, sondern eine softwaremäßige Filterung, sofern erforderlich, durchgeführt wird.

Schließlich ist aus Fig. 4 noch eine SPI-Schnittstelle 46 ersichtlich, die über das SPI-Interface 38 und das Embedded Modul 36 die Verbindung zum Ethernet bzw. zum Modul 22 (Fig. 2A) herstellt.

Die so beschriebene Messelektronik liefert digitale Messwerte, die abhängig von der Einstellung der Verstärkung am Verstärker 43 einer bestimmten Brückenspannung entsprechen. Damit kann die elektrische Verstärkung des Systems definiert werden. Der Nullpunkt des Systems kann durch Offsets im Sensor oder in der Messschaltung vom Nullwert verschieden sein bzw. auch irgendwelchen Drifts, z.B. mit der Temperatur, unterliegen. Der A/D-Wandler 43 bietet dafür eine Möglichkeit zur Kalibrierung, so dass genaue, reproduzierbare Messwerte über den gesamten in der Praxis auftretenden Temperaturbereich erhalten werden können.

Zur Temperaturmessung können wie erwähnt digitale Temperatursensoren 9 oder aber auch analoge Temperatursensoren 9', beispielsweise Pt100-Sensoren eingesetzt werden. Ein Beispiel für einen Messkanal 33 mit einem derartigen analogen Temperatursensor 9' ist in Fig. 5 veranschaulicht, wobei der Aufbau dieses Messkanals 33 im Prinzip größtenteils jenem des Messkanals 32 von Fig. 4 entspricht, so dass für entsprechende Komponenten die gleichen Bezugszahlen verwendet werden und sich eine neuerliche Beschreibung dieser Messkanal-Einheit, was den Aufbau anlangt, erübrigen kann. Ein ähnlicher Aufbau des Messkanals ist im Übrigen im Fall eines - analogen - Beschleunigungssensors 21 (Fig. 2A) gegeben.

Die Temperaturmessung sollte mit derartigen Sensoren 9 bzw. 9' durchgeführt werden, dass eine Auflösung von 0,1 °C und eine Genauigkeit von +/- 1 °C erzielt wird.

Ein Unterschied in der Konfiguration von Fig. 5 im Vergleich zu jener von Fig. 4 besteht darin, dass im Fall eines Temperatur-sensors 9' ein Vorverstärker 41 nicht benötigt wird. Es ist hierbei eine stabile Messung mit der geforderten Auflösung möglich. Die Erreichung der gewünschten Genauigkeit kann jedoch auch von der Streuung der Widerstandswerte der Pt100-Sensoren 9' abhängig sein, was mit einer entsprechenden Kalibrierung berücksichtigt werden kann.

Eine Temperaturmessung wird jeweils nur für einen gesamten Messzyklus benötigt, so dass die Messung der Temperatur in vergleichsweise großen Zeitabständen, z.B. in Intervallen von einer Sekunde oder mehr, erfolgen kann. Das Zeitraster der Temperaturmessung kann über die Software eingestellt werden. Das vom Sensor 9' erhaltene Analogsignal wird im Messkanal 33 wiederum digitalisiert (s. AD-Wandler 43) und wird anschließend über entsprechende Formeln im Embedded Modul 36 (s. Fig. 3) in den eigentlichen Temperaturwert umgerechnet.

Bevorzugt werden jedoch wie vorstehend erwähnt digitale Temperatur-Sensoren 11 verwendet (s. Fig. 3), wobei mittlerweile hochpräzise digitale Halbleiter-Temperatursensoren 9 zur Verfügung stehen, die den Temperaturwert beispielsweise über I2C- oder SPI-Schnittstellen direkt in digitaler Form ausgeben. Derartige digitale Temperatursensoren 9' ermöglichen auch größere Entfernungen zu den Messmodulen 7 bzw. deren RS485-Schnittstellen 34 (s. Fig. 3).

Wenn die Erfindung vorstehend anhand von besonders bevorzugten Ausführungsbeispielen erläutert wurde, so sind doch selbstverständlich im Rahmen der Erfindung weitere Abwandlungen und Modifikationen möglich. So ist es beispielsweise denkbar, bei kleinen Brückenkonstruktionen nur ein Messmodul 7 mit einer entsprechenden Anzahl von Messkanälen 32/33, z.B. auch nur sechs, vorzusehen, wenngleich die Erfindung ihre besonderen Vorteile vor allem dann erbringt, wenn eine Mehrzahl von derartigen Messmodulen 7 an einer Brücke 1 vorgesehen wird, und zwar in der entsprechenden Gruppierung, wie erläutert. Durch das beschriebene verteilte System, s. insbesondere Fig. 2 mit den Teilfiguren 2A und 2B, werden insbesondere die Vorteile einer einfachen Montage, einer exakten und raschen Messwertermittlung sowie einer raschen und genauen Auswertung der Messdaten ermöglicht.

## Patentansprüche

1. System zum Messen der Belastung einer Brücke (1) beim Befahren durch ein Fahrzeug, umfassend:
- mehrere Messmodule (7), die je mehrere Messkanal-Einheiten (32, 33) mit A/D-Konvertern aufweisen;
- den Messmodulen separat zugeordnete DMS-Sensoren (8), die zum Anbringen an der Brücke (1) vorgesehen sind, wobei die Sensoren analoge Messsignale drahtgebunden an die ihnen jeweils zugeordneten Messkanal-Einheiten (32, 33) übermitteln, die mittels A/D-Konvertern digitale Messdaten aus den Messsignalen herleiten; **dadurch gekennzeichnet, dass**
- das System außerdem ein PoE-Schaltmodul (22), einen örtlichen Server/Router (12) und eine entfernte Auswerteeinheit (18) umfasst;
- die digitalen Messdaten vom Server/Router (12) über eine Funk-Messdatenübertragung (16) zu der entfernten Auswerteeinheit (18) übertragen werden;
- die Messmodule (7) jeweils eine Übertragungs-Schnittstelle (36) umfassen, und parallel und drahtgebunden mit dem PoE-Schaltmodul (22) und über dieses mit dem örtlichen Server/Router (12) verbunden sind, wodurch ein örtliches Netz (LAN) (15) gebildet ist,
- der örtliche Server/Router (12) dazu eingerichtet ist, die Messmodule (7) in Synchronizität zu halten.

2. System nach Anspruch 1, **dadurch gekennzeichnet, dass** die Übertragungs-Schnittstelle (36) zugleich zum Empfang von Versorgungsspannung für das jeweilige Messmodul (7) eingerichtet ist, das eine zugehörige Energieversorgungseinheit (37) aufweist.

3. System nach Anspruch 2, **dadurch gekennzeichnet, dass** die Energieversorgungseinheit (37) unterschiedliche Spannungen für digitale bzw. analoge Schaltungsteile des Messmoduls (7) vorsieht.

4. System nach einem der Ansprüche 1 bis 3, **dadurch gekennzeichnet, dass** einzelne Messmodule (7) in Gruppen (19, 20) zusammengefasst sind.

5. System nach einem der Ansprüche 1 bis 4, **dadurch gekennzeichnet, dass** wenigstens ein Messmodul (7) mit einem eine Brückentragwerks-Temperatur erfassenden Temperatursensor (9; 9') verbunden ist.

6. System nach einem der Ansprüche 1 bis 5, **dadurch gekennzeichnet, dass** wenigstens ein Messmodul (7) mit einem Beschleunigungssensor (21) verbunden ist.

7. System nach einem der Ansprüche 1 bis 6, **dadurch gekennzeichnet, dass** jedes Messmodul (7) in einem dicht verschlossenen Gehäuse, z.B. aus Metall, angeordnet ist.

8. System nach einem der Ansprüche 1 bis 7, **gekennzeichnet durch** ein mit jedem Messmodul (7) verbundenes örtliches Rechnermittel (24) zur Durchführung von Vor-Ort-Berechnungen.

9. System nach einem der Ansprüche 1 bis 8, **dadurch gekennzeichnet, dass** der örtliche Server/Router (12) ein WLAN-Server ist.

10. System nach einem der Ansprüche 1 bis 9, **dadurch gekennzeichnet, dass** der örtliche Server/Router (12) ein GSM- oder UMTS-Modem zur Datenübertragung aufweist.

11. System nach einem der Ansprüche 1 bis 10, **gekennzeichnet durch** eine zur Anbringung auf der Brücke vorgesehene Kamera (10) zur seitlichen Fahrzeug-Erfassung, insbesondere zur Erfassung der Fahrzeug-Achsen.

12. System nach einem der Ansprüche 1 bis 11, **dadurch gekennzeichnet, dass** in der entfernten Auswerteeinheit (18) ein Pufferspeicher (26) vorgesehen ist.

## Claims

1. A system for measuring the load on a bridge (1) when being passed by a vehicle, comprising:
- a plurality of measuring modules (7), which each comprise a plurality of measuring channel units (32, 33) with A/D converters;
- strain gauge sensors (8) separately associated with the measuring modules, which are provided for attachment on the bridge (1), wherein the sensors transmit analogue measurement signals in a wired manner to the measuring channel units (32, 33) respectively associated with them, which derive digital measurement data from the measurement signals by means of A/D converters;
**characterised in that**
- the system additionally comprises a PoE (Power of Ethernal)-switching module (22), a local server/router (12) and a remote evaluation unit (18);
- the digital measurement data are transmitted from the server/router (12) via a radio measurement data transmission (16) to the remote evaluation unit (18);
- the measuring modules (7) in each case comprise a respective transmission interface (36), and are connected in parallel and in a wired manner to the PoE switching module (22) and via the same to the local server/router (12), whereby a local network (LAN) (15) is formed;
- the local server/router (12) is set up to keep the measuring modules (7) in synchronicity.

2. The system according to Claim 1, **characterised in that** the transmission interface (36) is simultaneously set up for receiving a supply voltage for the respective measuring module (7), which has an associated energy supply unit (37).

3. The system according to Claim 2, **characterised in that** the energy supply unit (37) provides different voltages for digital and analogue switching parts of the measuring module (7).

4. The system according to any one of Claims 1 to 3, **characterised in that** individual measuring modules (7) are combined into groups (19, 20).

5. The system according to any one of Claims 1 to 4, **characterised in that** at least one measuring module (7) is connected to a temperature sensor (9; 9') detecting a temperature of a bridge supporting structure.

6. The system according to any one of Claims 1 to 5, **characterised in that** at least one measuring module (7) is connected to an acceleration sensor (21).

7. The system according to any one of Claims 1 to 6, **characterised in that** each measuring module (7) is arranged in a housing, e.g. made of metal, which is closed in a sealed manner.

8. The system according to one of Claims 1 to 7, **characterised by** a local computing means (24) connected to each measuring module (7) for carrying out on-site calculations.

9. The system according to any one of Claims 1 to 8, **characterised in that** the local server/router (12) is a WLAN server.

10. The system according to any one of Claims 1 to 9, **characterised in that** the local server/router (12) has a GSM or UMTS modem for data transmission.

11. The system according to any one of Claims 1 to 10, **characterised by** a camera (10) for lateral vehicle detection, particularly for detecting the vehicle axles, provided for attachment on the bridge.

12. The system according to any one of Claims 1 to 11, **characterised in that** a buffer memory (26) is provided in the remote evaluation unit (18).

## Revendications

1. Système pour mesurer la charge d'un pont (1) lorsqu'il est traversé par un véhicule, comprenant :
- plusieurs modules de mesure (7) qui comportent chacun plusieurs unités de canaux de mesure (32, 33) avec des convertisseurs A/N ;
- des capteurs DMS (8) qui sont associés séparément aux modules de mesure et qui sont prévus pour être disposés sur le pont (1), les capteurs transmettant par voie filaire des signaux de mesure analogiques aux unités de canaux de mesure (32, 33) associées à chacun d'eux, lesquelles déduisent, à partir des signaux de mesure, des données de mesure numériques au moyen de convertisseurs A/N ;
**caractérisé en ce que**
- le système comprend en outre un module de commutation PoE (22), un serveur/routeur local (12) et une unité d'analyse distante (18) ;
- les données de mesure numériques sont transmises par le serveur/routeur (12) à l'unité d'analyse distante (18) par l'intermédiaire d'une transmission radio de données de mesure (16) ;
- les modules de mesure (7) comprennent chacun une interface de transmission (36) et sont connectés en parallèle et par voie filaire au module de commutation PoE (22) et, par l'intermédiaire de celui-ci, au serveur/routeur local (12), ce qui crée un réseau local (LAN) (15),
- le serveur/routeur local (12) est agencé de façon à maintenir les modules de mesure (7) en synchronie.

2. Système selon la revendication 1, **caractérisé en ce que** l'interface de transmission (36) est également agencée pour recevoir une tension d'alimentation pour le module de mesure correspondant (7), lequel comporte une unité d'alimentation en énergie associée (37).

3. Système selon la revendication 2, **caractérisé en ce que** l'unité d'alimentation en énergie (37) prévoit des tensions différentes pour les parties de circuit numérique et, respectivement, analogique du module de mesure (7).

4. Système selon une des revendications 1 à 3, **caractérisé en ce que** des modules de mesure individuels (7) sont rassemblés en groupes (19, 20).

5. Système selon une des revendications 1 à 4, **caractérisé en ce qu'**au moins un module de mesure (7) est connecté à un capteur de température (9 ; 9') enregistrant une température de l'appareil porteur du pont.

6. Système selon une des revendications 1 à 5, **caractérisé en ce qu'**au moins un module de mesure (7) est connecté à un capteur d'accélération (21).

7. Système selon une des revendications 1 à 6, **caractérisé en ce que** chaque module de mesure (7) est disposé dans un boîtier hermétiquement fermé, par exemple en métal.

8. Système selon une des revendications 1 à 7, **caractérisé par** un moyen de calcul local (24) connecté à chaque module de mesure (7) pour réaliser des calculs in situ.

9. Système selon une des revendications 1 à 8, **caractérisé en ce que** le serveur/routeur local (12) est un serveur WLAN.

10. Système selon une des revendications 1 à 9, **caractérisé en ce que** le serveur/routeur local (12) comporte, pour transmettre les données, un modem GSM ou UMTS.

11. Système selon une des revendications 1 à 10, **caractérisé par** une caméra (10) prévue pour être disposée sur le pont et destinée à filmer les véhicules latéralement, en particulier à filmer les essieux des véhicules.

12. Système selon une des revendications 1 à 11, **caractérisé en ce que** dans l'unité d'analyse distante (18) est prévue une mémoire tampon (26).
